(19) Europäisches Patentamt
European Patent Office
Office européen des brevets

(11) Veröffentlichungsnummer : **0 043 901**
**B1**

(12) **EUROPÄISCHE PATENTSCHRIFT**

(45) Veröffentlichungstag der Patentschrift : **25.07.84**

(51) Int. Cl.³ : **C 08 C 19/30**, B 27 K 3/15

(21) Anmeldenummer : **81103545.0**

(22) Anmeldetag : **09.05.81**

(54) **Wasserlösliche, quartäre Ammoniumgruppen tragende Polymerisate, Verfahren zu ihrer Herstellung sowie ihre Verwendung.**

(30) Priorität : **11.07.80 DE 3026300**

(43) Veröffentlichungstag der Anmeldung : **20.01.82 Patentblatt 82/03**

(45) Bekanntmachung des Hinweises auf die Patenterteilung : **25.07.84 Patentblatt 84/30**

(84) Benannte Vertragsstaaten : **AT CH FR GB IT LI SE**

(56) Entgegenhaltungen :
**DE-A- 2 911 243**
**DE-B- 2 838 930**
**US-A- 4 071 428**

(73) Patentinhaber : **CHEMISCHE WERKE HÜLS AG**
**Postfach 1320**
**D-4370 Marl 1 (DE)**

(72) Erfinder : **Konietzny, Alfred, Dr.**
**Lipper Weg 195**
**D-4370 Marl (DE)**
Erfinder : **Bartz, Wilfried, Dr.**
**Am Alten Sportplatz 17 a**
**D-4370 Marl (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 043 901 B1

**Beschreibung**

Der Gegenstand der vorliegenden Anmeldung ist eine Weiterentwicklung des Gegenstandes der DE-PS 28 38 930. Dort werden wäßrige Behandlungsmittel für Holz und Holzwerkstoffe beschrieben, die ein aufgrund von olefinischen Doppelbindungen zur oxidativen Trocknung befähigtes, Aminogruppen tragendes und daher mit Säuren wasserlösliches oder wasserdispergierbares Bindemittel auf der Basis eines 1,3-Butadienpolymerisates enthalten.

Bei den Behandlungsmitteln des Standes der Technik hat es sich als Nachteil herausgestellt, daß ihr Aufnahmevermögen für die als Holzschutzmittel wirkenden anorganischen Salze und Säuren begrenzt ist, sei es, daß die Löslichkeit dieser Zusätze in den Behandlungsmitteln begrenzt ist oder sei es, daß bei erhöhten Zusätzen Koagulation des Bindemittels eintritt.

Aufgabe der vorliegenden Anmeldung war es, Bindemittel mit verbesserten Eigenschaften für den genannten Verwendungszweck bzw. neue Polymerisate, die auch für andere Verwendungszwecke in Betracht kommen, sowie ein Verfahren zur Herstellung dieser Polymerisate bereitzustellen. Im Zusammenhang mit dem oben genannten, speziellen Verwendungszweck wird im folgenden die Bezeichnung Imprägnierungsmittel anstatt Behandlungsmittel gebraucht. Unter der Imprägnierung von Holz und Holzwerkstoffen werden alle bekannten Behandlungsverfahren, wie Tränken, gegebenenfalls im Vakuum oder unter Druck, Streichen oder Spritzen (vgl. DIN 68 800, Blatt 3), verstanden.

Die Aufgabe wurde erfindungsgemäß dadurch gelöst, daß spezielle, wasserlösliche, quartäre Ammoniumgruppen tragende Polymerisate sowie ein Verfahren zu ihrer Herstellung gemäß den Ansprüchen 1 und 2 bereitgestellt wurden.

Als Basispolymerisate, welche in drei Reaktionsstufen, nämlich durch Epoxidierung, Aminierung und Quarternierung, zu den erfindungsgemäßen Polymerisaten modifiziert werden, werden Homo- und Copolymerisate des 1,3-Butadiens verwendet, wobei erstere besonders bevorzugt sind. Als Comonomere kommen copolymerisierbare 1,3-Diolefine, wie Isopren und 1,3-Pentadien, infrage. Ferner können copolymerisierbare, α-ungesättigte Monoolefine, wie Styrol, als Comonomere eingesetzt werden. Sie sind jedoch weniger als Comonomere bevorzugt.

Die Copolymerisate sind vorzugsweise aus mindestens 90 Mol-% 1,3-Butadien sowie maximal 10 Mol-% der Comonomeren aufgebaut.

In den Homo- oder Copolymerisaten liegen vorzugsweise weniger als 40 % der olefinischen Doppelbindungen in trans-Struktur vor. Von diesen Polymerisaten sind solche ganz besonders bevorzugt, bei denen zugleich wenigstens 40 % der olefinischen Doppelbindungen in cis-Struktur vorliegen.

Die relative Molekülmasse ($\overline{M}_n$), durch welche das Basispolymerisat charakterisiert wird, wird dampfdruckosmometrisch bestimmt. Sie beträgt vorzugsweise 1 000 bis 2 500.

Die Basispolymerisate lassen sich nach bekannten Verfahren, wie sie in den DE-PSS 11 86 631, 12 12 302, 12 41 119, 12 51 537, 12 92 853, 20 29 416, 21 22 956 und der DE-OS 23 61 782 beschrieben sind, herstellen.

Die Basispolymerisate können entweder direkt, so wie sie bei der Herstellung anfallen, für die weiteren Umsetzungen verwendet oder aber vorher durch bekannte Maßnahmen, wie beispielsweise Isomerisierung, Cyclisierung oder partielle Hydrierung, modifiziert werden, wobei die unmodifizierten Polymerisate besonders bevorzugt sind. Im Falle der modifizierten Polymerisate ist darauf zu achten, daß die Jodzahl wenigstens 100, vorzugsweise wenigstens 250 [g Jod/100 g] (DIN 53 241) beträgt. Dadurch wird ein für die nachfolgende Epoxidierung ausreichender Gehalt an olefinischen Doppelbindungen im Basispolymerisat gewährleistet. Ein Überschuß an olefinischen Doppelbindungen über den Bedarf bei der Epoxidierung ist vorteilhaft, weil dadurch das über die beiden weiteren Reaktionsstufen zu erhaltene, quartäre Ammoniumgruppen tragende Polymerisat, gegebenenfalls nach Zusatz von Sikkativen, zur oxidativen Trocknung befähigt wird.

Die Epoxidierung der Basispolymerisate erfolgt in an sich bekannter Weise, beispielsweise wie in der DE-PS 28 38 930, Spalte 7, letzter Absatz, beschrieben, wobei gegebenenfalls auch Vinylgruppen epoxidiert werden.

Der Gehalt der Polymerisate an titrierbarem Epoxidsauerstoff (DIN 16 945) beträgt vorzugsweise 3 bis 9 Massen-%.

Die Aminierung der Epoxidierungsprodukte erfolgt in an sich bekannter Weise, beispielsweise wie in der DE-AS 27 32 736 und den DE-OSS 27 34 413 und 28 28 014 beschrieben.

Die Menge des insgesamt angebotenen Amins kann äquimolar in bezug auf den Gehalt an Epoxidgruppen im epoxidierten Polymerisat sein. Es ist auch möglich, Amin in Übershuß zu verwenden und den nicht umgesetzten Anteil an Amin nach der Umsetzung wieder zu entfernen. Das Amin kann auch im Unterschuß zugegeben werden, so daß einige der Epoxid-Ringe unverändert erhalten bleiben.

Der Gehalt der Polymerisate an tertiären, in der Seitenkette stehenden, mit der Hauptkette bzw. einem der C-Atome, welche aus einer Vinylgruppe stammen, über 3 bis 7 Kettenglieder verbundenen, quaternierbaren Aminogruppen beträgt vorzugsweise 0,07 bis 0,3 mol/100 g.

Zur Aminierung geeignete Diamine entsprechen der allgemeinen Formel I.

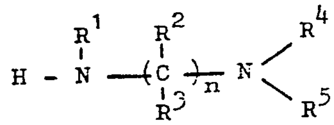
(I)

Im Falle von primär-tertiären Diaminen bedeuten $R^1$ ein Wasserstoffatom, n eine ganze Zahl von 2 bis 6, $R^2$ und $R^3$ ein Wasserstoffatom oder einen Alkylrest mit 1 bis 4 C-Atomen, welcher gegebenenfalls mit einer Hydroxy- oder Alkoxygruppe mit 1 bis 4 C-Atomen substituiert ist, wobei die α-Stellung des Alkylrestes ausgenommen ist, $R^4$ und $R^5$ einen linearen Alkylrest mit 1 bis 4 C-Atomen, welcher gegebenenfalls mit einer Hydroxy- oder Alkoxygruppe mit 1 bis 4 C-Atomen substituiert ist, wobei die α-Stellung des Alkylrestes ausgenommen ist. $R^4$ und $R^5$ können auch zusammen mit dem tertiären Stickstoffatom einen fünf- oder sechsgliedrigen Ring bilden.

Geeignete primär Diamine sind

N.N-Dimethyl-propylendiamin-(1.3),
N.N-Diethyl-propylendiamin-(1.3),
N.N-Diethyl-tetramethylendiamin-(1.4),
2.2.N.N-Tetramethyl-propylendiamin-(1.3),
N.N-Bis-(β-hydroxyethyl-) propylendiamin-(1.3),
N-(3-Aminopropyl-) morpholin und
N-(3-Aminopropyl-) piperidin.

Bevorzugt ist N.N-Dimethyl-propylendiamin-(1.3).

Im Falle von sekundär-tertiären Diaminen bedeutet $R^1$ einen Alkylrest mit 1 oder 2 C-Atomen, welcher gegebenenfalls mit einer Hydroxy- oder Alkoxygruppe mit 1 oder 2 C-Atomen substituiert ist, wobei die α-Stellung des Alkylrestes ausgenommen ist. n und $R^2$ bis $R^5$ haben die Bedeutung des Alkylrestes wie oben.

Falls n zwei und $R^2$ und $R^3$ ein Wasserstoffatom bedeuten, können $R^1$ und $R^4$ auch zusammen mit den beiden Stickstoffatomen einen sechsgliedrigen Ring bilden.

Geeignete sekundär-tertiäre Diamine sind

1-Methyl-piperazin
1-(β-Hydroxyethyl)- piperazin

Zur Aminierung geeignete, primäre Monoamine sind beispielsweise

Ethanolamin
Propylamin
3-Ethoxy-propylamin-(1)
Cyclohexylamin
Benzylamin
Anilin

Zur Aminierung geeignete, sekundäre Monoamine sind beispielsweise

Dimethylamin
Diethanolamin
Piperidin
Morpholin

Zur Quaternierung der Aminierungsprodukte geeignete, niedermolekulare Oxirane entsprechen der allgemeinen Formel II.

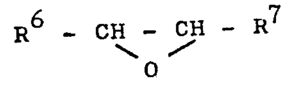
(II)

Darin bedeuten $R^6$ und $R^7$ ein Wasserstoffatom und einen Alkylrest mit 1 oder 2 C-Atomen, welcher gegebenenfalls mit einer Hydroxygruppe oder einem Chloratom substituiert ist. $R^6$ und $R^7$ können auch eine 1,3-Propylen- oder 1,4-Butylenkette bedeuten, so daß mit den C-Atomen des Oxirans ein fünf- oder sechsgliedriger Ring gebildet wird.

Geeignete Oxirane sind

Ethylenoxid, Propylenoxid,
Epichlorhydrin,
Glycidol,

Cyclopentenoxid und Cyclohexenoxid.
Bevorzugt ist Ethylenoxid.

Die Quaternierung der aminierten Polymerisate, die an sich bekannt ist (DE-AS 28 31 785, DE-OS 28 47 600, Beispiel 2), erfolgt erfindungsgemäß mit niedermolekularen Oxiranen in Gegenwart von Wasser und Säure, wie beispielsweise in Houben-Weyl, Methoden der organischen Chemie, Bd. 11/2 (1958), S. 610 ff und Bd. 14/2 (1963), S. 444 beschrieben.

Die Umsetzung der tertiären, in der Seitenkette stehenden, mit der Hauptkette bzw. einem der C-Atome, welche aus einer Vinylgruppe stammen, über 3 bis 7 Kettenglieder verbundenen, quaternierbaren Aminogruppen mit Oxiranen in Gegenwart von Wasser und Säure erfolgt in der Regel so, daß eine Aminogruppe mit je einem Molekül Oxiran und Säure unter Bildung einer Tetraalkylammoniumsalzgruppe reagiert.

Der Zusatz von wasserverträglichen, inerten, organischen Lösemitteln, wie niederen Alkoholen, ist zur Umsetzung in der Regel nicht erforderlich. Er erleichtert unter Umständen, insbesondere bei hohem Feststoffgehalt, die Herstellung einer wäßrigen Dispersion des Aminierungsproduktes zur Vorbereitung der Quaternierung.

Zur partiellen Quaternierung der quaternierbaren Aminogruppen wird das Oxiran im Unterschuß, zur quantitativen Quaternierung in der Regel in geringem Überschuß eingesetzt.

Die zur Quaternierung mit Oxiranen erforderliche Säure kann anorganisch oder organisch sein. Geeignete Säuren sind beispielsweise

$HF$, $HCl$, $HClO_4$, $HNO_3$, $H_2SO_4$, $H_3PO_4$;

Ameisen-, Essig-, Propion-, Benzoe-, Salicyl-, Oxal-, Bernstein-, Malein-, Phthal-, Terephthal-, Milch-, Wein- und p-Toluolsulfonsäure.

Bevorzugt ist Kohlensäure. In der Regel wird diese im Überschuß eingesetzt, indem vor Reaktionsbeginn ein $CO_2$-Druck von bis zu 15 bar (20 °C) eingestellt wird.

Die Kohlensäure kann aus den im Reaktionsprodukt vorliegenden Tetraalkylammoniumhydrogencarbonat-Gruppen durch einfaches Einrühren einer weniger leicht flüchtigen und in der Regel stärkeren, für den speziellen Verwendungszweck erwünschten Säure partiell oder vollständig verdrängt werden. Je nach der Art und Menge der zugesetzten Säure lassen sich pH-Werte im Bereich von 8 bis 1 einstellen. Dabei können auch die nicht quaternierten Aminogruppen in Salzform überführt werden, so daß die Löslichkeit des Polymerisates in Wasser erhöht wird.

In der Regel besitzen die quaternierten Polymerisate eine ausreichende Löslichkeit oder Dispergierbarkeit in Wasser, wenn wenigstens 0,05 mol der tertiären Aminogruppen/100 g des Aminierungsproduktes quaterniert sind.

Bevorzugt sind Polymerisate, bei denen 0,07 bis 0,3 mol der tertiären Aminogruppen/100 g des Aminierungsproduktes quaterniert sind.

Die erfindungsgemäßen, quartäre Ammoniumgruppen tragenden Polymerisate sind, insbesondere im pH-Bereich von 2 bis 6, mit Wasser unbegrenzt mischbar. Der Zusatz von wasserverträglichen, organischen Lösemitteln, wie niederen Alkoholen, ist dabei in der Regel nicht erforderlich.

Die erfindungsgemäßen Polymerisate können verschiedenen Verwendungszwecken zugeführt werden. Sie eignen sich besonders als Bindemittel in wäßrigen Imprägnierungsmitteln für Holz und Holzwerkstoffe.

Für die Verwendung als Imprägnierungsmittel wird der pH-Wert der wäßrigen Lösung oder Dispersion vorzugsweise auf 2 bis 6 eingestellt. Dazu werden vorzugsweise solche Säuren eingesetzt, welche eine biozide Wirkung aufweisen, wie Fluß-, Phosphor-, Phosphorig-, Arsen-, Benzoe- oder Salicylsäure, oder welche mit Metallionen Komplexe bilden, wie Weinsäure oder Ethylendiamintetraessigsäure.

Zur Herstellung der erfindungsgemäßen Imprägnierungsmittel werden der erhaltenen wäßrigen Lösung oder Dispersion des Bindemittels bekannte Holzschutzmittel sowie gegebenenfalls übliche Zusatzmittel, wie Pigmente, Hautverhütungsmittel, Sikkative und oberflächenaktive Stoffe, zugesetzt.

Geeignete Holzschutzmittel sind in erster Linie wasserlösliche, biozid wirkende, anorganische Salze und Säuren, wie beispielsweise Alkalifluoride, Alkaliarsenate, Silicofluoride, Hydrogenfluoride, Borverbindungen (Borsäure, Borate) und Salze des Bleis, Zinns, Cadmiums, Nickels, Kobalts, Mangans, Kupfers, Quecksilbers, Chroms und Zinks.

Auch organische Holzschutzmittel, wie beispielsweise Pentachlorphenol, können zugesetzt werden. Bei unzureichender Löslichkeit derselben können organische, wasserverträgliche Lösemittel, wie niedere Alkohole und Ketone, zugesetzt werden.

Zusatzstoffe der beschriebenen Art können in praxisüblichen Mengen zugemischt werden. Die Art und Menge solcher Zuschläge richten sich stets nach dem jeweilig zu behandelnden Werkstoff, seinem Verwendungszweck sowie dem Imprägnierverfahren und sind durch wenige orientierende Versuche leicht zu ermitteln.

Die erfindungsgemäßen Imprägnierungsmittel haben im allgemeinen einen Bindemittelgehalt von 1 bis 30, vorzugsweise 5 bis 15 Massen-%, und können nach allen bekannten Verfahren des Standes der Technik (vgl. DIN 68 800, Blatt 3) appliziert werden. Dabei ist die erzielbare Schutzwirkung — wie dem Fachmann bekannt ist — eng mit dem Behandlungsverfahren verknüpft.

Die nachfolgenden Beispiele dienen zur Erläuterung der Erfindung. Unter Teilen werden Massenteile und unter Prozenten Massenprozente verstanden, falls nicht anders angegeben.

Bei den Herstellungsbeispielen werden zwei handelsübliche Polybutadiene eingesetzt.

Tabelle 1 : Eigenschaften der Polybutadiene

| | 1 | 2 |
|---|---|---|
| $\overline{M}_n$ (dampfdruckosmometrisch bestimmt in Chlorbenzol) | ca. 1 700 | ca. 1 000 |
| Jodzahl (DIN 53 241), g Jod/100 g | 445 | 400 |
| Viskosität (DIN 53 214, 20 °C) Pa.s | 0,8 | 7,5 |
| Doppelbindungsverteilung, IR-spektrometrisch bestimmt, 1,4-cis/1,4-trans/Vinyl | 73/25/2 | 0/13/87 |

Epoxidierung

Die Polybutadiene 1 und 2 werden in bekannter Weise mit 60 %igem $H_2O_2$ in Gegenwart von Ameisensäure (DE-PS 28 38 930, Spalte 7, letzter Absatz) zu den Produkten 3 und 4 epoxidiert.

Tabelle 2 : Eigenschaften der epoxidierten Polybutadiene

| | 3 | 4 |
|---|---|---|
| Gesamtsauerstoff (Elementaranalyse), % | 9,4 | 7,6 |
| titrierbarer Epoxidsauerstoff (DIN 16 945), % | 7,3 | 5,6 |
| Viskosität (DIN 53 214, 20 °C), Pa.s | 11 | 160 |

Aminierung

Die Produkte 3 und 4 werden zu den Produkten 5 und 6 wie folgt aminiert.

5 89,7 Teile des Produktes 3, 8,2 Teile N.N-Dimethylpropylendiamin-(1.3) und 2,1 Teile Diethanolamin werden unter Stickstoff 8 h unter Rühren auf 180 °C erhitzt. Es wird ein hochviskoses, blaßgelbes Produkt erhalten, in dem die Amine quantitativ angelagert sind.

Titrierbarer Epoxidsauerstoff (DIN 16 945) : 4,25 % ; Aminstickstoff (Probe mit Tetrahydrofuran verdünnt, mit wäßriger HCl angesäuert und mit n/10 methanolischer KOH potentiometrisch titriert) : 0,18 mol/100 g, ≙ 0,08 mol quaternierbare, tertiäre Aminogruppen/100 g.

6 84,7 Teile des Produktes 4 und 15,3 Teile N.N-Dimethyl-propylendiamin-(1.3) werden wie bei 5 je 1 h bei 170, 180 und 190 °C erhitzt. Nicht umgesetztes Amin wird bei 190 °C während 1 h im lebhaften Stickstoffstrom abgetrieben. Es wird ein hochviskoses, blaßgelbes Produkt erhalten.

Titrierbarer Epoxidsauerstoff (DIN 16 945) : 1,95 % ; Aminstickstoff (bestimmt wie bei 5) : 0,27 mol/100 g, ≙ 0,13 mol quaternierbare, tertiäre Aminogruppen/100 g.

Quaternierung

Die Produkte 5 und 6 werden zu den Produkten 7 bis 9 wie folgt quaterniert.

7 28,8 Teile des Produktes 5 werden mit 68,4 Teilen 0,4 n wäßriger Salzsäure entsprechend einem Neutralisationsgrad von ca. 53 % bei 20 °C gerührt, bis eine homogene Mischung erhalten wird. Dann werden bei dieser Temperatur 2,8 Teile Propylenoxid eingerührt und 1 h auf 70 °C erhitzt. Es wird eine cremige Reaktionsmischung erhalten, welche sich mit Wasser zu einer klaren, farblosen Lösung verdünnen läßt und folgende Eigenschaften zeigt :

Trockenrückstand (2 h bei 120 °C) : 31,5 g/100 g Reaktionsaustrag
Aminstickstoff (bestimmt wie bei 5) : 0,027 mol/100 g Reaktionsaustrag

8 24,5 g Teile des Produktes 5 werden in einem Becherglas zusammen mit 65 Teilen $CO_2$-gesättigtem Wasser bei 15 °C gerührt, wobei stets durch Zugabe von Trockeneis für einen $CO_2$-Überschuß gesorgt wird. Nach ca. 1 h wird eine niedrigviskose, milchige, homogene Flüssigkeit erhalten, in welche eine Lösung von 2,1 Teilen Ethylenoxid in 8,4 Teilen Wasser eingerührt wird. Die erhaltene

Mischung wird in einen Stahlautoklaven gegeben, $CO_2$ wird bis zu einem Druck von 10 bar aufgedrückt und die Reaktionsmischung 3 h auf 80 °C erhitzt, wobei sich ein Druck von ca. 20 bar einstellt. Nach dem Abkühlen und Entspannen wird eine blaßgelbe, schwach trübe Lösung mit folgenden Eigenschaften erhalten :

Viskosität (DIN 53 214, 20 °C) : 40 mPa.s
Trockenrückstand (2 h bei 120 °C) : 26 g/100 g Reaktionsaustrag
Aminstickstoff (bestimmt wie bei 5) : 0,026 mol/100 g Reaktionsaustrag

9 21,2 Teile des Produktes 6 werden bei 80 °C mit 5,3 Teilen Isopropanol verdünnt. Nach dem Abkühlen auf 20 °C werden 60 Teile $CO_2$-gesättigtes Wasser portionenweise eingerührt, wobei stets durch Zugabe von Trockeneis für einen $CO_2$-Überschuß gesorgt wird. Nach ca. 2 h wird eine cremige, fließfähige, homogene Mischung erhalten, in welche eine Lösung von 2,8 Teilen Ethylenoxid in 10,7 Teilen Wasser eingerührt wird. Die erhaltene Mischung wird in einen Stahlautoklaven gegeben, $CO_2$ wird bis zu einem Druck von 10 bar aufgedrückt und die Reaktionsmischung 3 h auf 80 °C erhitzt. Es wird eine gelbliche, klare Lösung mit folgenden Eigenschaften erhalten :

Viskosität (DIN 53 214, 20 °C) : 175 mPa.s
Trockenrückstand (2 h bei 120 °C) : 22,5 g/100 g Reaktionsaustrag
Aminstickstoff (bestimmt wie bei 5) : 0,029 mol/100 g Reaktionsaustrag
Um festzustellen, ob die Quaternierungsprodukte innerhalb der erfindungsgemäßen Grenzen liegen, kann man wie folgt vorgehen.

1) Man bestimmt den Gesamtreaktionsaustrag (in Teilen), gegebenenfalls nach Zusatz einer ausreichenden Menge eines homogenisierend wirkenden, wasserverträglichen, organischen Lösemittels, dem das jeweils eingesetzte Aminierungsprodukt (in Teilen) und der bekannte Aminstickstoff (in Mol) vor der Quaternierung entsprechen.

2) Durch potentiometrische Titration einer aliquoten Abnahme bestimmt man wie beschrieben den Aminstickstoff (in Mol) nach der Quaternierung und bezieht diesen auf den Gesamtreaktionsansatz.

3) Durch Substraktion und Bezug auf das eingesetzte Aminierungsprodukt ermittelt man die tertiären Aminogruppen, die quaterniert worden sind, in mol/100 g Aminierungsprodukt.

Herstellung der Imprägnierungsmittel

Erfindungsgemäß : I bis III ; zum Vergleich : A und B

I. 37,7 Teile des Reaktionsaustrages 8 (≙ 9,8 Teile Trockenrückstand) werden portionenweise mit einer Lösung von 2,1 g Teilen $KHF_2$ (technische Qualität, acidimetrisch bestimmter Säuregehalt : 1,37 mol/100 g) in 60,2 Teilen Wasser unter Rühren zusammengegeben, wobei $CO_2$ unter Schäumen freigesetzt wird. Es wird eine schwach trübe, blaßgelbe Lösung wasserähnlicher Viskosität erhalten.

Bindemittelgehalt : ca. 10 %
pH-Wert : 5,3

II. Entsprechend wie bei I wird aus 37,7 Teilen des Reaktionsaustrages 8 und einer Lösung von 1,6 Teilen 87 prozentiger, wäßriger $H_3PO_4$ in 60,7 Teilen Wasser eine klare, blaßgelbe Lösung erhalten.

pH-Wert : 2,7

III. Entsprechend wie bei I wird aus 40,0 Teilen des Reaktionsaustrages 9 (≙ 9,0 Teile Trockenrückstand) und einer Lösung von 2,6 Teilen $KHF_2$ (technisch) in 57,4 Teilen Wasser eine ähnlich wie bei II aussehende Lösung erhalten.
pH-Wert : 5,7

A. 10,6 Teile des Produktes 5, 3,1 Teile $KHF_2$ (technisch) und 86,3 Teile Wasser werden zusammengerührt. Es wird eine klare, gelbliche Lösung wasserähnlicher Viskosität erhalten.

pH-Wert : 5,3

B. Aus 10,7 Teilen des Produktes 5, 2,4 Teilen 87 prozentiger, wäßriger $H_3PO_4$ und 87 Teilen Wasser wird eine ähnlich wie bei A aussehende Lösung erhalten.

pH-Wert : 3,8

Aufnahmevermögen der Imprägnierungsmittel für anorganische Salze und Säuren

In jeweils 100 g des Imprägnierungsmittels werden die in der folgenden Tabelle 3 aufgeführten Zusätze (in g bei 20 °C) portionenweise eingerührt, bis die Löslichkeitsgrenze erreicht ist (im Falle von $H_3BO_3$, dessen Löslichkeit 5,1 g/100 g Wasser beträgt), das polymere Bindemittel koaguliert oder die Zugabe nicht fortgesetzt wird (gekennzeichnet durch *).

Tabelle 3 : Aufnahmevermögen der Imprägnierungsmittel für anorganische Salze und Säuren

| | I | II | III | A | B |
|---|---|---|---|---|---|
| $H_3BO_3$ | 7,3 | 5,6 | 14 | 1,9 | 5,3 |
| $KHF_2$ (technisch) | 10,2 | 6,4 | 11,2 | 5,2 | 5,2 |
| $CuSO_4 \cdot 5\ H_2O$ | > 38* | 15,8 | > 30* | 3,6 | 1,1 |

Die Tabelle 3 zeigt, daß das Aufnahmevermögen der mit den erfindungsgemäßen Bindemitteln hergestellten Imprägnierungsmittel für anorganische Salze und Säuren gegenüber den mit den nicht erfindungsgemäßen Bindemitteln hergestellten Imprägnierungsmitteln deutlich und in nicht vorhersehbarer Weise verbessert ist.

**Ansprüche**

1. Wasserlösliche, quartäre Ammoniumgruppen tragende Polymerisate, welche durch Umsetzung von
A. niedermolekularen Alkylierungsmitteln mit
B. tertiäre, quaternierbare Aminogruppen tragenden Polymerisaten in an sich bekannter Weise erhalten werden,
dadurch gekennzeichnet,
daß
A. ein niedermolekulares Oxiran und
B. ein Polymerisat ist, das
a. durch Epoxidierung eines 1,3-Butadienpolymerisates, das
a.1 aus mindestens 70 Mol-% 1,3-Butadien und
a.2 aus bis zu 30 Mol-% anderen copolymerisierbaren 1,3-Diolefinen und α-ungesättigten Monoolefinen aufgebaut ist, und
a.3 eine relative Molekülmasse ($\bar{M}_n$) von 500 bis 6 000 besitzt,
a.4 in an sich bekannter Weise bis zu einem Gehalt an titrierbarem Epoxidsauerstoff von 2 bis 10 Massen-%, und
b. durch Umsetzung des Epoxidierungsproduktes mit
b.1 primär-tertiären und/oder sekundär-tertiären Diaminen, gegebenenfalls im Gemisch mit primären und/oder sekundären Monoaminen,
b.2 in an sich bekannter Weise bis zu einem Gehalt an tertiären, in der Seitenkette stehenden, mit der Hauptkette bzw. einem der C-Atome, welche aus einer Vinylgruppe stammen, über 3 bis 7 Kettenglieder verbundenen, quaternierbaren Aminogruppen von 0,05 bis 0,5 mol/100 g des Aminierungsproduktes erhalten wird, wobei
c. 0,05 bis 0,5 mol der tertiären Aminogruppen/100 g des Aminierungsproduktes quaterniert werden.

2. Verfahren zur Herstellung der quartäre Ammoniumgruppen tragenden Polymerisate gemäß Anspruch 1, dadurch gekennzeichnet, daß
a. ein 1,3-Butadienpolymerisat, das
a.1 aus mindestens 70 Mol-% 1,3-Butadien und
a.2 aus bis zu 30 Mol-% anderen copolymerisierbaren 1,3-Diolefinen und α-ungesättigten Monoolefinen aufgebaut ist, und
a.3 eine relative Molekülmasse ($\bar{M}_n$) von 500 bis 6 000 besitzt,
a.4 in an sich bekannter Weise bis zu einem Gehalt an titrierbarem Epoxidsauerstoff von 2 bis 10 Massen-% epoxidiert wird,
b. das Epoxidierungsprodukt mit
b.1 primär-tertiären und/oder sekundär-tertiären Diaminen, gegebenenfalls im Gemisch mit primären und/oder sekundären Monoaminen,

b.2 in an sich bekannter Weise bis zu einem Gehalt an tertiären, in der Seitenkette stehenden, mit der Hauptkette bzw. einem der C-Atome, welche aus einer Vinylgruppe stammen, über 3 bis 7 Kettenglieder verbundenen, quaternierbaren Aminogruppen von 0,05 bis 0,5 mol/100 g des Aminierungsproduktes umgesetzt wird, und

c. das Aminierungsprodukt mit

c.1 niedermolekularen Oxiranen

c.2 in an sich bekannter Weise umgesetzt wird, so daß 0,05 bis 0,5 mol der tertiären Aminogruppen/100 g des Aminierungsproduktes quaterniert werden.

3. Verwendung der quartäre Ammoniumgruppen tragenden Polymerisate gemäß Anspruch 1 und 2 Bindemittel in wäßrigen Imprägnierungsmitteln für Holz und Holzwerkstoffe.

**Claims**

1. A water-soluble polymer which contains quaternary ammonium groups and has been obtained by reaction in a known manner of

A. a low molecular weight alkylating agent, and

B. a polymer containing quaternisable tertiary amine groups,

characterised in that

A. is a low molecular weight oxirane and

B. is a polymer which is obtained

a. by epoxidation of a 1,3-butadiene polymer which is formed of

a.1 at least 70 mol-% of 1,3-butadiene units and

a.2 up to 30 mol-% of other copolymerisable 1,3-diolefin and/or α-unsaturated monoolefin units, and

a.3 has a relative molecular weight ($\bar{M}_n$) of 500 to 6 000,

a.4 the epoxidation being carried out in a known manner up to a content of titratable epoxide oxygen of 2 to 10 mass %, and

b. reaction of the epoxidation product with

b.1 a primary-tertiary diamine and/or a secondary-tertiary diamine, optionally admixed with a primary monoamine and/or a secondary monoamine,

b.2 the reaction being carried out in a known manner up to a content of quaternisable tertiary amine groups, positioned in the side chains and linked with the main chain or with one of the carbon atoms stemming from a vinyl group via 3 to 7 chain members, of 0.05 to 0.5 mol per 100 g of the amination product,

whereby

c. 0.05 to 0.5 mol of the tertiary amine groups per 100 g of the amination product are quaternised.

2. A process for the production of a polymer containing quaternary ammonium groups according to claim 1, characterised in that

a. a 1,3-butadiene polymer which is formed of

a.1 at least 70 mol-% of 1,3-butadiene units and

a.2 up to 30 mol-% of other copolymerisable 1,3-diolefin and/or α-unsaturated monoolefin units, and

a.3 has a relative molecular weight ($\bar{M}_n$) of 500 to 6 000,

a.4 is epoxidised in a known manner up to a content of titratable epoxide oxygen of 2 to 10 mass %,

b. the epoxidation product is reacted with

b.1 a primary-tertiary diamine and/or a secondary-tertiary diamine, optionally admixed with a primary monoamine and/or a secondary monoamine,

b.2 in a known manner up to a content of quaternisable tertiary amine groups, positioned in the side chains and linked with the main chain or with one of the carbon atoms stemming from a vinyl group via 3 to 7 chain members, of 0.05 to 0.5 mol per 100 g of the amination product, and

c. the amination product is reacted with

c.1 a low molecular weight oxirane

c.2 in a known manner so that 0.05 to 0.5 mol of the tertiary amino groups per 100 g of the amination product are quaternised.

3. The use of a polymer containing quaternary ammonium groups according to claim 1 or 2 as a binder in aqueous impregnating agents for wood and wood material.

**Revendications**

1. Produits de polymérisation solubles dans l'eau, portant des groupes ammonium quaternaire, obtenus d'une manière connue en soi par réaction

A. d'agents d'alkylation de bas poids moléculaire sur

B. des produits de polymérisation portant des groupes amine tertiaire quaternisables, lesdits produits de polymérisation étant caractérisés par le fait qu'on fait réagir

A. un oxiranne de bas poids moléculaire et

B. un produit de polymérisation qui est obtenu

a. par époxydation d'un produit de polymérisation de 1,3-butadiène édifié

a.1 à partir de 70 mol-% au moins de 1,3-butadiène et

a.2 à partir d'une quantité allant jusqu'à 30 mol-% d'autres 1,3-dioléfines copolymérisables et de mono-oléfines insaturées en alpha, et qui

a.3 possède une masse moléculaire relative ($\bar{M}_n$) de 500 à 6 000,

a.4 d'une manière connue en soi jusqu'à avoir une teneur en oxygène titrable d'époxyde de 2 à 10 % en masse, et

b. par réaction du produit d'époxydation sur

b.1 des diamines primaires-tertiaires et/ou secondaires/tertiaires, le cas échéant en mélange avec des mono-amines primaires et/ou secondaires,

b.2 d'une manière connue en soi jusqu'à avoir, pour 100 g de produit d'amination, une teneur de 0,05 à 0,5 mole de groupes amine tertiaire quaternisables se trouvant dans la chaîne latérale et reliés à la chaîne principale ou à l'un des atomes de carbone provenant d'un groupe vinyle, par 3 à 7 chaînons, tandis que

c. de 0,05 à 0,5 mole des groupes amine sont quaternisés par 100 g du produit d'amination.

2. Procédé de préparation des produits de polymérisation portant des groupes ammonium quaternaire selon la revendication 1, caractérisé par le fait que l'on époxyde

a. un produit de polymérisation de 1,3-butadiène, qui est édifié

a.1 à partir d'au moins 70 mol-% de 1,3-butadiène et

a.2 à partir d'une quantité allant jusqu'à 30 mol-% d'autres 1,3-dioléfines copolymérisables et mono-oléfines insaturées en alpha, et qui

a.3 possède une masse moléculaire relative ($\bar{M}_n$) de 500 à 6 000, d'une manière connue en soi

a.4 jusqu'à avoir une teneur en oxygène d'époxyde titrable de 2 à 10 % en masse, que l'on fait réagir

b. le produit d'époxydation

b.1 sur des diamines primaires-tertiaires et/ou secondaires/tertiaires, le cas échéant en mélange avec des mono-amines primaires et/ou secondaires,

b.2 d'une manière connue en soi jusqu'à avoir, par 100 g de produit d'amination, une teneur de 0,05 à 0,5 mole de groupes amine tertiaire quaternisables se trouvant dans la chaîne latérale et reliés, à la chaîne principale ou à l'un des atomes de carbone provenant d'un groupe vinyle, par 3 à 7 chaînons, et qu'on fait réagir d'une manière connue en soi

c. le produit d'amination sur

c.1 des oxirannes de bas poids moléculaire

c.2 de manière que, par 100 g de produit d'amination, de 0,05 à 0,5 mole des groupes amine tertiaire soient quaternisés.

3. L'utilisation, comme liants dans des agents aqueux d'imprégnation du bois et des matières d'œuvre ligneuses, des produits de polymérisation, portant des groupes ammonium quaternaire, selon les revendications 1 et 2.